# EUROPEAN PATENT APPLICATION

(11) **EP 4 398 337 A1**
(43) Date of publication of application: **10.07.2024**
(21) Application number: 22863231.1
(22) Date of filing: 23.08.2022
(51) Int. Cl.: H01M 4/36, H01M 4/134

(54) **COMPLEX FORMED BY NETWORK SKELETON MATERIAL HAVING LITHIOPHILIC MODIFICATION LAYER AND METAL LITHIUM, AND PREPARATION METHOD THEREFOR AND APPLICATION THEREOF**

(30) Priority: 02.09.2021 CN 202111023963
(71) Applicant: China Energy Lithium Co., Ltd, Tianjin 300457 (CN)
(72) Inventor: KONG, Deyu, Tianjin 300457 (CN); HUAN, Qingna, Tianjin 300457 (CN); SUN, Zhaoyong, Tianjin 300457 (CN); CHEN, Qiang, Tianjin 300457 (CN); MU, Hanbo, Tianjin 300457 (CN)
(74) Representative: Witte, Weller & Partner Patentanwälte mbB
(86) International application number: PCT/CN2022/114220
(87) International publication number: WO 2023/030092

(57) **Abstract**

The present disclosure provides a complex formed by metal lithium and a network skeleton material having a lithiophilic modification layer, a preparation method therefor and application thereof. The method of the present application can realize the industrial preparation of a complex of metal lithium and a network skeleton material having a highly lithiophilic modification layer, and the metal lithium and the carbon material in the complex as prepared are completely infiltrated with each other, such that there is no delamination or void in the complex. The conductive 3D carbon skeleton structure in the complex can provide a reserved space for metal lithium deposition, thereby alleviating the volume expansion of the metal lithium negative electrode. The conductivity of the carbon skeleton structure can reduce the current density on the electrode surface, thereby reducing the generation and growth of lithium dendrites. The electrode prepared with the complex has a stable structure, facilitating the preparation of an electrode with a long cycling lifetime.

## Description

### Technical Field

The present application relates to the technical field of new materials, and particularly to a complex formed by metal lithium and a network skeleton material having a highly lithiophilic modification layer, a preparation method therefor and application thereof.

### Background

Currently, the energy density of lithium ion batteries has reached the limit of the battery system thereof, and it is very urgent to seek a new battery system having a high energy density.

Metal lithium as a metal material having the smallest density has been a critical material for manufacturing lightweight alloys and metal lithium batteries. Especially in the new energy resource field, metal lithium has a potential to be an individual part, i.e., a metal lithium negative electrode, due to many advantages such as its high specific capacity (3860 mAh/g) and the most negative potential (-3.04 V vs. H/H⁺), and plays a decisive role in increasing the energy density of batteries. However, conventional metal lithium negative electrodes suffer from problems of volume expansion and lithium dendrites during battery cycling. One of the reasons for the breakage of lithium dendrites also resides in the breakage of dendrite roots caused by changes in electrode volume. In order to solve such problems, a general way is to prepare a metal lithium negative electrode having a three-dimensional (3D) conductive skeleton structure, so as to reduce volume expansion of the metal lithium negative electrode and reduce local current density on the electrode surface. The 3D skeleton structure can provide a reserved space for metal lithium deposition. When the metal lithium is deposited in the reserved space, the electrode will not expand. The conductivity of the 3D skeleton structure can reduce the current density on the electrode surface, and thus can effectively reduce the generation of dendrites. In this regard, the preparation of a metal lithium belt having a conductive 3D skeleton structure can effectively alleviate the expansion of the metal lithium negative electrode and reduce the dendrites.

Currently, there are two kinds of processes for combining a 3D skeleton structure with metal lithium. One of the processes is to combine the metal lithium with the 3D skeleton structure by a mechanical pressure. However, there is an obvious delamination inside the metal lithium belt prepared by such a process, and the process has some destructive effect on the skeleton structure. The other of the processes is to deposit the metal lithium onto the 3D skeleton through electro-deposition, to obtain a metal lithium belt having a 3D skeleton structure. However, such a process is inefficient, and is difficult to implement on large scale.

In conclusion, there is a need for developing a process capable of preparing on large scale a metal lithium complex having a 3D skeleton structure.

### Summary

In view of the above problems, the inventors of the present application provide a complex (also referred to as a lithium carbon complex or a lithium carbon complex material) formed by metal lithium and a (3D) network skeleton material having a (highly) lithiophilic modification layer, a preparation method therefor, and application thereof. The method allows industrial production of the complex of metal lithium and (3D) network skeleton (carbon) material having a highly lithiophilic modification layer, and the metal lithium completely infiltrates into the carbon material in the complex as prepared, such that there is no delamination or void in the complex. The conductive 3D carbon skeleton structure (which itself comprises pores) in the complex can provide a reserved space for metal lithium deposition, thereby alleviating the volume expansion when used as a metal lithium negative electrode. The conductivity of the carbon skeleton structure can reduce the current density on the electrode surface, thereby reducing the generation and growth of lithium dendrites. The electrode prepared with the complex has a stable structure, facilitating the preparation of an electrode with a long cycling lifetime.

In particular, in an aspect, the present application provides a complex formed by metal lithium and a (3D) network skeleton material having a lithiophilic modification layer, the complex comprising:
a porous skeleton which is a (porous) network skeleton having a lithiophilic modification layer, formed by intertwining a carbon composite material (i.e., a carbon skeleton material), wherein the carbon composite material comprises a crystalline carbonaceous material and an amorphous carbonaceous wrapping layer covering a surface of the crystalline carbonaceous material, and the amorphous carbonaceous wrapping layer forms the lithiophilic modification layer (that is, the amorphous carbonaceous wrapping layer serves as the lithiophilic modification layer), and
metal lithium filled in pores of the porous skeleton.

In the present disclosure, the term "crystalline carbonaceous material" refers to a material in which the carbon atoms that make up this material are orderly arranged according to a certain rule (in microstructure), while the term "amorphous material" refers to a material in which the atoms are orderly arranged in a short range, but disorderly arranged in a long range (also known as a non-crystalline material).

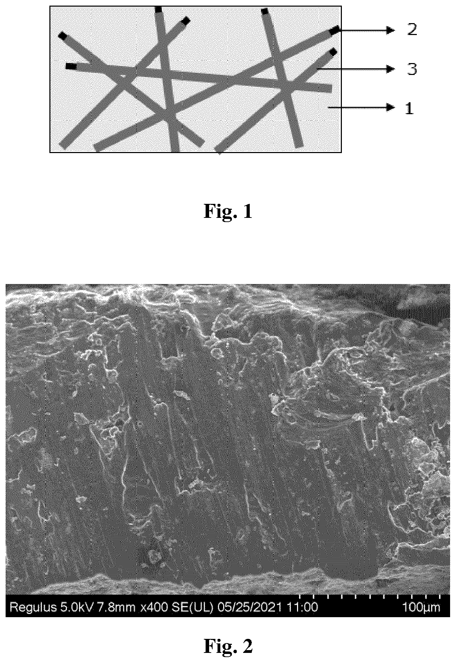

A schematic structure of the lithium carbon complex material of the present application is shown in Fig. 1. The lithium carbon complex material is composed of a porous skeleton and metal lithium 1 filled in pores of the porous skeleton (through impregnation, infiltration or deposition), wherein the porous skeleton is formed by intertwining a carbon composite material which comprises an inner crystalline carbonaceous material 2 and an outer amorphous carbonaceous wrapping layer 3.

In some embodiments, the porous skeleton has a porosity in a range from 15% to 85%, and a pore size in a range from 5 nanometers (nm) to 90 nm.

In some embodiments, the crystalline carbonaceous material comprises at least one selected from the group consisting of a carbon nanotube, graphene, a carbon fiber, a carbon-based metal oxide fiber, and a carbon-based covalent organic fiber.

In some embodiments, the carbon composite material is fibrous.

In some embodiments, the amorphous carbonaceous wrapping layer is a carbonized product of an organic material which is blended with the crystalline carbonaceous material, wherein the organic material is selected from the group consisting of an organic binder, an organic filler and a crosslinker, and the amorphous carbonaceous wrapping layer has a thickness in a range from 10 nm to 600 nm.

In some embodiments, the organic binder is selected from the group consisting of polyvinyl alcohol, polyvinylidene fluoride, polybutylene styrene, polystyrene, polycarboxycellulose, cyanoacrylates, polyacrylic acid, cyclodextrins, cyclic ether derivatives, polyurethanes, methacrylates, epoxy resins, vinyl acetate polymer, polyimides, organic fluoropolymers, organosiloxanes, polyethylene glycol, polyethylene, polyvinyl chloride, polypropylene, glycerin, ethylparaben and its derivatives, and monosaccharide or polysaccharide polymers.

In some embodiments, the organic filler is selected from the group consisting of plastic microparticles (such as polypropylene (PP), polyethylene terephthalate (PET), polystyrene (PS) and so on), benzoic acid, sodium benzoate, sorbic acid, potassium sorbate, calcium propionate, and dehydroacetates.

In some embodiments, the crosslinker is selected from the group consisting of macromolecular polymers of acrylic acid bonded with allyl sucrose or pentaerythritol allyl ether, benzoyl peroxide, diethylenetriamine, sodium borate hydrate, cellulose derivatives, and isothiazolinone.

In some embodiments, the lithium carbon complex material is in a belt form, and the lithium carbon belt has a thickness in a range from 1 micrometer (µm) to 1000 µm and a width in a range from 5 millimeters (mm) to 1 meter (m).

In some embodiments, the outer amorphous carbonaceous wrapping layer has a thickness in a range from 10 nm to 600 nm.

In some embodiments, the amorphous carbonaceous wrapping layer further comprises metal nanoparticles embedded in the amorphous carbonaceous wrapping layer or on a surface thereof.

In some embodiments, the metal nanoparticles have a size in a range from 5 nm to 800 nm, and are dispersedly embedded in the outer amorphous carbonaceous wrapping layer.

In another aspect, the present application provides a method for preparing the complex as described above, the method comprising:
Step 1: mixing an organic binder, a filler, a crosslinker and a solvent uniformly to obtain a mixture, wherein the filler comprises a crystalline carbonaceous material, and optionally an organic filler and an inorganic filler;
Step 2: pre-drying the mixture obtained in Step 1 to remove the solvent;
Step 3: heating (carbonizing) the material obtained in Step 2 under an inert atmosphere at a temperature in a range from 300°C to 1200°C and then cooling the material to obtain a porous skeleton; and
Step 4: impregnating the porous skeleton obtained in Step 3 with molten lithium to obtain a complex of metal lithium and a network skeleton material having a highly lithiophilic modification layer.

In some embodiments, a mass ratio of the organic binder, the filler, the crosslinker and the solvent is (4-15 parts): (10-30 parts): (0.01-20 parts): (20-400 parts).

In some embodiments, a mass proportion of the crystalline carbonaceous material in the filler is in a range from 15% to 100%, such as from 15% to 99.5%.

In some embodiments, the organic binder is selected from the group consisting of polyvinyl alcohol, polyvinylidene fluoride, polybutylene styrene, polystyrene, polycarboxycellulose, cyanoacrylates, polyacrylic acid, cyclodextrins, cyclic ether derivatives, polyurethanes, methacrylates, epoxy resins, vinyl acetate polymer, polyimides, organic fluoropolymers, organosiloxanes, polyethylene glycol, polyethylene, polyvinyl chloride, polypropylene, glycerin, ethylparaben and its derivatives, and monosaccharide or polysaccharide polymers.

In some embodiments, the organic filler is selected from the group consisting of plastic microparticles (such as PP, PET, and PS), benzoic acid, sodium benzoate, sorbic acid, potassium sorbate, calcium propionate, and dehydroacetates.

In some embodiments, the inorganic filler is selected from the group consisting of metal nanoparticles, metal oxides, metal nitrides, calcium carbonate, hydrous magnesium silicate, mica, hydrated silica, and silica.

In some embodiments, the crosslinker is selected from the group consisting of macromolecular polymers of acrylic acid bonded with allyl sucrose or pentaerythritol allyl ether, benzoyl peroxide, diethylenetriamine, sodium borate hydrate, cellulose derivatives, and isothiazolinone.

In some embodiments, the solvent is selected from the group consisting of water, tetrachloroethylene, toluene, turpentine, acetone, methyl acetate, ethyl acetate, pentane, n-hexane, cyclohexane, octane, lemonile (lemon nitrile), alcohol, xylene, toluene, cyclohexanone, isopropyl alcohol, diethyl ether, propylene oxide, methyl butanone, ethylene glycol monomethyl ether, ethylene glycol monoethyl ether, ethylene glycol monobutyl ether, acetonitrile, pyridine, phenol, and ethylenediamine.

In some embodiments, the pre-drying is performed at a temperature in a range from -200°C to 200°C, and preferably from 20°C to 100°C, for a period ranging from 1 to 48 hours, and preferably 2 to 8 hours.

In some embodiments, the filler in Step 1 comprises metal nanoparticles, and a mass ratio of the metal nanoparticles, the organic binder, other fillers, the crosslinker and the solvent is (0.01-20 parts): (4-15 parts): (10-30 parts): (0.01-20 parts): (20-400 parts).

In some embodiments, the porous skeleton obtained in Step 3 is a lithiophilic carbon skeleton.

In some embodiments, the heating in Step 3 is performed for 2-24 hours, and preferably 2-10 hours.

In some embodiments, in the lithium carbon complex material obtained in Step 4, a mass ratio of the porous skeleton to the metal lithium is in a range from 1:0.1 to 1:6.

In some embodiments, the lithium carbon complex material obtained may be subjected to a processing, including, for example, turning, slicing, mechanical rolling, laser cutting, extruding and so on.

In another aspect, the present application provides a metal lithium negative electrode comprising the complex as described above or a complex prepared by the method as described above.

In another aspect, the present application provides a metal lithium battery comprising the metal lithium negative electrode as described above.

The present application has at least one of the following advantages:
1. The industrial preparation of a complex of metal lithium and network skeleton material having a highly lithiophilic modification layer can be realized, and the complex as prepared is completely infiltrated, such that there is no delamination or void inside the material.
2. The conductive 3D carbon skeleton structure in the complex can provide a reserved space for metal lithium deposition, thereby alleviating the volume expansion when used as a metal lithium negative electrode.
3. The conductivity of the carbon skeleton structure can reduce the current density on the electrode surface, thereby reducing the growth of lithium dendrites.
4. The electrode prepared with the complex has a stable structure, facilitating the preparation of an electrode with a long cycling lifetime.

### Brief Description of Drawings

Fig. 1 is a schematic diagram of a complex of metal lithium and a network skeleton material having a lithiophilic modification layer according to the present application.
Fig. 2 is a scanning electron microscope image of the cross section of the complex prepared in Example 1.
Fig. 3 is a specific capacity measurement curve of the complex of Example 1.
Fig. 4 is an optical photograph of the complex of Example 1 with lithium removed.
Fig. 5 is a scanning electron microscope image of the complex prepared in Comparative Example 1.
Fig. 6 is a graph showing the cycling of the button cells with the complexes in Example 1 and Comparative Example 1.

### Detailed Description

The present application will be illustrated below with reference to particular examples.

### Example 1

Polyvinyl alcohol (Aladdin Scientific Corp., Shanghai), polystyrene microspheres (Suzhou Weimai Novel Material Co. Ltd.), carbon nanotubes (Shandong Dazhan), diethylenetriamine (Shanghai Yantai Industrial Co. Ltd.), isothiazolinone (Aladdin Scientific Corp., Shanghai), and deionized water were uniformly mixed in a ratio by mass part of 6:9:9:5:5:75.

The mixture prepared was pre-dried at 85°C for 5 hours.

The pre-dried material was placed in a crucible, and subjected to a high temperature treatment at 1000°C under an inert atmosphere for 5 hours to obtain a carbon skeleton material.

The carbon skeleton material prepared above was contacted with molten metal lithium, and the metal lithium was impregnated into (the pores of) the carbon skeleton material. After cooling, a complex formed by metal lithium and network skeleton material having a highly lithiophilic modification layer was obtained.

The complex obtained above was tested by a scanning electron microscope to determine the binding state of the metal lithium and the carbon material, and the test results are shown in Fig. 2. As seen from Fig. 2, there was no delamination or void inside the complex, and the materials were completely infiltrated with each other as a whole.

The resulting complex was punched into sheets, and assembled into a button cell, where a metal lithium sheet was used as a counter electrode. A carbonate-based electrolyte solution and a polypropylene separator were used, where the carbonate-based electrolyte solution was a solution in which the solute was 1 mol/L LiPF₆ and the solvent was a mixture of EC and EMC (in a volume ratio of 1:1).

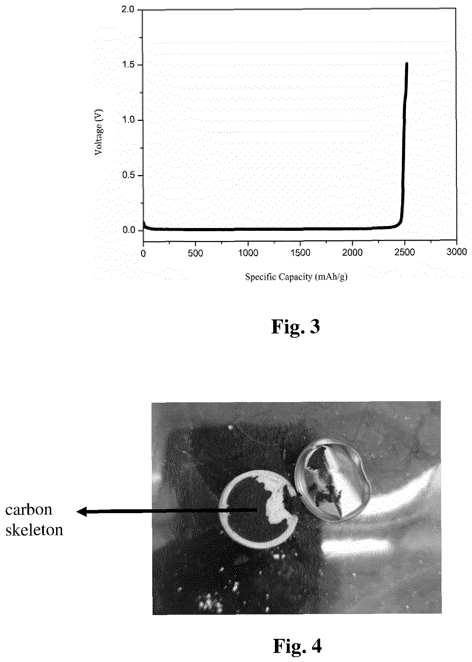

The complex was subjected to a lithium removal experiment to determine the specific capacity of the complex, and the specific capacity measurement curve of the complex is shown in Fig. 3. As seen from Fig. 3, the electrode comprising the complex had a specific capacity up to 2500 mAh/g.

The button cell with lithium removed was disassembled to determine the condition of the residual carbon skeleton, and the optical photograph of the disassembled button cell is shown in Fig. 4. As seen from Fig. 4, the residual carbon skeleton after lithium removal was clearly visible, the edge of the carbon skeleton had a neat arc shape, and after the metal lithium was completely removed, the carbon skeleton still remained a good morphology.

### Example 2

Polyurethane (Aladdin Scientific Corp., Shanghai), polystyrene microspheres (Suzhou Weimai Novel Material Co. Ltd.), silver nanoparticles, carbon nanotubes (Shandong Dazhan), benzoyl peroxide (Aladdin), isothiazolinone (Aladdin Scientific Corp., Shanghai), and deionized water were uniformly mixed in a ratio by mass part of 10:8:1:9:5:5:80.

The mixture prepared was pre-dried at 65°C for 10 hours.

The pre-dried material was placed in a crucible, and subjected to a high temperature treatment at 800°C under an inert atmosphere for 3 hours to obtain a carbon skeleton material containing silver nanoparticles.

The carbon skeleton material prepared above was contacted with molten metal lithium, and the metal lithium was impregnated into the carbon skeleton material. After cooling, a complex formed by metal lithium and network skeleton material having a highly lithiophilic modification layer was obtained.

### Example 3

Polyvinyl alcohol (Aladdin Scientific Corp., Shanghai), hydrated silica (Suzhou Weimai Novel Material Co. Ltd.), carbon nanotubes (Shandong Dazhan), benzoyl peroxide (Aladdin), isothiazolinone (Aladdin Scientific Corp., Shanghai), and deionized water were uniformly mixed in a ratio by mass part of 10:12:9:5:1:55.

The mixture prepared was pre-dried at 65°C for 10 hours.

The pre-dried material was placed in a crucible, and subjected to a high temperature treatment at 800°C under an inert atmosphere for 6 hours to obtain a carbon skeleton material.

The carbon skeleton material prepared above was contacted with molten metal lithium, and the metal lithium was impregnated into the carbon skeleton material. After cooling, a complex formed by metal lithium and network skeleton material having a highly lithiophilic modification layer was obtained.

### Example 4

Polyvinyl alcohol (Aladdin Scientific Corp., Shanghai), hydrated silica (Suzhou Weimai Novel Material Co. Ltd.), carbon nanotubes (Shandong Dazhan), benzoyl peroxide (Aladdin), and p-xylene were uniformly mixed in a ratio by mass part of 10: 12:9:5:55.

The mixture prepared was pre-dried at 65°C for 10 hours.

The pre-dried material was placed in a crucible, and subjected to a high temperature treatment at 800°C under an inert atmosphere for 6 hours to obtain a carbon skeleton material.

The carbon skeleton material prepared above was contacted with molten metal lithium, and the metal lithium was impregnated into the carbon skeleton material. After cooling, a complex formed by metal lithium and network skeleton material having a highly lithiophilic modification layer was obtained.

### Comparative Example 1

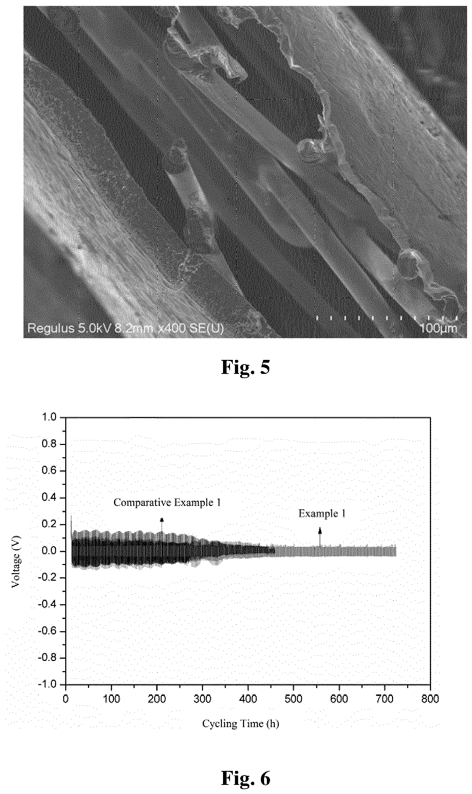

A carbon material having a 3D skeleton structure was placed between two layers of lithium belts with a thickness of 50 µm to form a sandwich structure, and a complex with a thickness of 180 µm formed by the carbon material and the metal lithium was prepared by rolling. The complex prepared was observed with a scanning electron microscope to determine the binding state of the 3D carbon skeleton material and the metal lithium, and the test results are shown in Fig. 5. As seen from Fig. 5, there was an obvious delamination in the complex prepared by rolling, and it was very difficult for the metal lithium to enter into the carbon skeleton material.

The complexes in Example 1 and Comparative Example 1 above were respectively used as a working electrode for assembling a button cell, where a commercially available lithium sheet was used as a counter electrode. A carbonate-based electrolyte solution and a polypropylene separator were used, where the carbonate-based electrolyte solution was a solution in which the solute was 1 mol/L LiPF₆ and the solvent was a mixture of EC and EMC (in a volume ratio of 1:1).

After the cell was assembled, a cycling performance test was carried out. The cycling performance test comprised steps of: leaving the assembled button cell stand for 12 hours, charging the cell at a constant current of 1 mA/cm² for 1 hour, then discharging the cell at a constant current of 1 mA/cm² for 1 hour, and recording the voltage change as a function of time during the cycling. The results for the cycling test are shown in Fig. 6. As can be seen from Fig. 6, the cell assembled with the complex of Comparative Example 1 had a relatively large polarization voltage at the beginning, and the voltage of the cell decreased sharply after cycling for about 450 hour, indicating the short circuit of the cell and the end of the cell lifetime; and the cell assembled with the complex of Example 1 had a smaller polarization potential at the beginning than that of the cell assembled with the complex of Comparative Example 1, and the voltage of the cell was gradually stable over the course of the cycling, and when the cell was cycled for more than 700 hours, the polarization voltage of the cell remained stable without any obvious "voltage dip" occurred, and the cell could still work normally. Thus, the electrode comprising the complex of Example 1 had a more stable structure, and the electrode as prepared had a longer cycling lifetime.

It can be understood that although the complex of metal lithium and network skeleton material having a highly lithiophilic modification layer and a preparation method therefor according to the present application are described in detail with particular embodiments in the examples, the above description is presented only for the purpose of satisfying legal requirements, and the present application is not limited to the particular examples. The complex of metal lithium and network skeleton material having a highly lithiophilic modification layer and the preparation method therefor can be reproduced by those skilled in the art through proper operations according to the disclosure and teaching of the specification.

Proper modifications and variations can be made on the above embodiments by those skilled in the art according to the disclosure and teaching of the specification above. Therefore, the present application is not limited to the particular embodiments as disclosed and described above, and certain modifications and variations on the present application should also fall within the protection scope of the claims of the present application. Furthermore, although some particular terms are used in the specification, those terms are only for the purpose of description, but not intended to limit the present application in any way.

## Claims

1. A complex formed by metal lithium and a network skeleton material having a lithiophilic modification layer, **characterized in that** the complex comprises:
a porous skeleton which is a network skeleton having a lithiophilic modification layer, formed by intertwining a carbon composite material, wherein the carbon composite material comprises a crystalline carbonaceous material and an amorphous carbonaceous wrapping layer covering a surface of the crystalline carbonaceous material, and the amorphous carbonaceous wrapping layer forms the lithiophilic modification layer, and
metal lithium filled in pores of the porous skeleton.

2. The complex according to claim 1, **characterized in that** the crystalline carbonaceous material comprises at least one selected from the group consisting of a carbon nanotube, graphene, a carbon fiber, a carbon-based metal oxide fiber, and a carbon-based covalent organic fiber; and the amorphous carbonaceous wrapping layer is a carbonized product of an organic material, which is blended with the crystalline carbonaceous material, wherein the organic material is selected from the group consisting of an organic binder, an organic filler, and a crosslinker.

3. The complex according to claim 1, **characterized in that** the complex is in a belt form, wherein the belt has a thickness in a range from 1 µm to 1000 µm and a width in a range from 5 mm to 1 m.

4. The complex according to claim 1, **characterized in that** the amorphous carbonaceous wrapping layer has a thickness in a range from 10 nm to 600 nm.

5. The complex according to claim 1, **characterized in that** the amorphous carbonaceous wrapping layer further comprises metal nanoparticles embedded therein or on a surface thereof, wherein the metal nanoparticles have a size in a range from 5 nm to 800 nm.

6. A method for preparing the complex according to any one of claims 1 to 5, **characterized in that** the method comprises:
Step 1: mixing an organic binder, a filler, a crosslinker and a solvent uniformly to obtain a mixture, wherein the filler comprises a crystalline carbonaceous material, and optionally an organic filler and an inorganic filler;
Step 2: pre-drying the mixture obtained in Step 1 to remove the solvent;
Step 3: heating the material obtained in Step 2 under an inert atmosphere at a temperature in a range from 300°C to 1200°C and then cooling the material to obtain a porous skeleton; and
Step 4: impregnating the porous skeleton obtained in Step 3 with molten lithium to obtain the lithium carbon complex material.

7. The method according to claim 6, **characterized in that** a mass ratio of the organic binder, the filler, the crosslinker and the solvent is (4-15 parts): (10-30 parts): (0.01-20 parts): (20-400 parts), and
a mass proportion of the crystalline carbonaceous material in the filler is in a range from 15% to 100%.

8. The method according to claim 6, **characterized in that**
the organic binder is selected from the group consisting of polyvinyl alcohol, polyvinylidene fluoride, polybutylene styrene, polystyrene, polycarboxycellulose, cyanoacrylates, polyacrylic acid, cyclodextrins, cyclic ether derivatives, polyurethanes, methacrylates, epoxy resins, vinyl acetate polymer, polyimides, organic fluoropolymers, organosiloxanes, polyethylene glycol, polyethylene, polyvinyl chloride, polypropylene, glycerin, ethylparaben and its derivatives, and monosaccharide or polysaccharide polymers;
the organic filler is selected from the group consisting of plastic microparticles, benzoic acid, sodium benzoate, sorbic acid, potassium sorbate, calcium propionate, and dehydroacetates;
the inorganic filler is selected from the group consisting of metal nanoparticles, metal oxides, metal nitrides, calcium carbonate, hydrous magnesium silicate, mica, hydrated silica, and silica;
the crosslinker is selected from the group consisting of macromolecular polymers of acrylic acid bonded with allyl sucrose or pentaerythritol allyl ether, benzoyl peroxide, diethylenetriamine, sodium borate hydrate, cellulose derivatives, and isothiazolinone; and
the solvent is selected from the group consisting of water, tetrachloroethylene, toluene, turpentine, acetone, methyl acetate, ethyl acetate, pentane, n-hexane, cyclohexane, octane, lemonile, alcohol, xylene, toluene, cyclohexanone, isopropyl alcohol, diethyl ether, propylene oxide, methyl butanone, ethylene glycol monomethyl ether, ethylene glycol monoethyl ether, ethylene glycol monobutyl ether, acetonitrile, pyridine, phenol, and ethylenediamine.

9. The method according to claim 6, **characterized in that** the filler in Step 1 further comprises metal nanoparticles.

10. The method according to claim 6, **characterized in that** in the lithium carbon complex material obtained in Step 4, a mass ratio of the porous skeleton to the metal lithium is in a range from 1:0.1 to 1:6.

11. The method according to claim 8, **characterized in that** the plastic micropartiles comprise polypropylene microspheres, polyethylene terephthalate microspheres, polystyrene microspheres, or a combination thereof.

12. A metal lithium negative electrode comprising the complex according to any one of claims 1 to 5, or a complex prepared by the method according to any one of claims 6 to 11.

13. A metal lithium battery comprising the metal lithium negative electrode according to claim 12.
